# EUROPÄISCHE PATENTSCHRIFT

(11) **EP 4 008 214 B1**
(45) Veröffentlichungstag und Bekanntmachung des Hinweises auf die Patenterteilung: **02.12.2026**
(21) Anmeldenummer: 22152807.8
(22) Anmeldetag: 08.06.2020
(51) Int. Cl.: A45C 3/00

(54) **FEUERHEMMENDE TASCHE ZUR AUFNAHME VON ENTZÜNDLICHEN GERÄTEN ODER ENERGIESPEICHERN**
FIRE-INHIBITING BAG FOR HOLDING INFLAMMATORY DEVICES OR ENERGY STORAGE DEVICES
POCHE IGNIFUGE DESTINÉE À LA RÉCEPTION DES APPAREILS INFLAMMABLES OU DES ACCUMULATEURS D'ÉNERGIE

(30) Priorität: 20.06.2019 DE 202019103451 U
(43) Veröffentlichungstag der Anmeldung: 08.06.2022
(62) Dokumentnummer(n) der früheren Anmeldung(en) nach Art. 76 EPÜ: 20731461.8 / 3 986 199
(73) Patentinhaber: Innovint Aircraft Interior GmbH, 22041 Hamburg (DE)
(72) Erfinder: Henschel, Lars, 22765 Hamburg (DE); Asmus, Ingo, 25436 Uetersen (DE)
(74) Vertreter: Meissner Bolte Partnerschaft mbB

(56) Entgegenhaltungen:
- EP-B1- 2 193 066
- FR-A1- 2 818 510
- US-A1- 2009 190 865

## Beschreibung

Die Erfindung betrifft eine feuerhemmende Tasche zur Aufnahme von entzündlichen Geräten oder Energiespeichern, insbesondere Lithium-Ionen-Batterien, nach dem Oberbegriff des Anspruchs 1.

Viele heutige Kommunikationsgeräte und andere elektronische Einheiten nutzen zur Energieversorgung Batterien oder Akkumulatoren. Als besonders vorteilhaft hat sich die Verwendung von Lithiumbatterien erwiesen, da diese eine hohe Energiedichte und spezifische Energie, eine hohe Zellenspannung und geringe Selbstentladung besitzen sowie in weiten Temperaturbereichen einsetzbar sind. Neben Lithium-Batterien werden auch in großem Maße Lithium-Ionen-Akkumulatoren verwendet, die wiederaufladbar sind. Im Folgenden werden beide Typen gleichsam als Batterien benannt.

Die Verwendung von Lithium-Batterien mit ihrer sehr hohen Speicherdichte erfordert besondere Sicherheitsmaßnahmen bei der Beförderung und im Transport derartiger Batterien oder Geräte, die solche Batterien enthalten. Es besteht eine hohe Brandgefahr bei Kurzschluss oder Wasser-Einfluss, insbesondere ausgelöst durch mechanische oder extreme thermische Einwirkung, Herstellungsfehler o.ä. Daher unterliegen sie insbesondere in der Luftfahrtindustrie besonderen Sicherheitsvorschriften, denn Brandereignisse im Flugzeug können zu verheerenden Katastrophen führen. Lithium-Batterien dürfen daher z.B. nicht im Aufgabegepäck transportiert werden, sondern sind von Fluggästen im Handgepäck mitzuführen.

Piloten eines Flugzeugs verwenden auch vermehrt Tablet-Computer im Cockpit (sogenannte EFB, Electronic Flight Bags), um darauf Flugdaten, wie Karten, Bordbücher etc. gespeichert zu halten. Daher finden sich mit Lithium-Energie betriebene Geräte auch vermehrt in besonders sicherheitskritischen Bereichen eines Flugzeugs.

Bei einem Defekt eines Lithium-Energiespeichers kann nicht nur ein Feuer entstehen, sondern aufgrund der hermetisch abgeschlossenen Bauweise derartiger Energiespeicher kann ein solcher Defekt zu einer exothermen Explosion mit unabsehbaren Folgen führen. Die entstehenden Temperaturen können dabei 800 °C übersteigen, so dass ein Löschen mit Standardmitteln nur schwer oder gar nicht möglich ist.

Es besteht daher großer Bedarf, mit Lithium-Batterien betriebene Geräte oder Lithium enthaltende Energiespeicher so gut wie möglich abzusichern.

Es sind bereits verschiedene Aufnahmebehälter bekannt geworden, in denen derartige Energiespeicher oder solche enthaltende Geräte aufgenommen werden können.

Aus dem Unionsgeschmacksmuster 00267084-0001 ist eine feuerfeste Tasche für elektronische Geräte bekannt geworden, mit der die Brand- und Explosionsgefahr von einem in der Tasche aufgenommen Energiespeicher stark reduziert werden konnte.

Aus der WO2014/074113A1 ist ein Koffer zur Aufnahme von kritischen Energiespeichern bekannt, bei dem in den Koffer integrierte Filter zur Rauchfilterung und Gasentfernung verwendet werden. Ein derartiger Koffer ist jedoch sehr voluminös und schwer, so dass er im Cockpit eines Flugzeugs nicht verwendbar ist.

Die EP2471125B1 beschreibt einen Behälter zur Aufnahme eines Energiespeichers und zur Absicherung im Fall eines exothermen Vorgangs, bei dem die Wandung des Behälters aus einer Schichtstruktur gebildet ist, die eine erste Schicht aus gewebtem keramischem Stoff und eine zweite Schicht aus einem Stoff enthält, der oxidierte Polyacrylnitrilfasern aufweist. Bei Verwendung von keramischen Stoffmaterialien ist allerdings die Krebsgefahr als erhöht einzustufen.

In der US 2009/190865 A1 ist eine feuerhemmende Tasche zur Aufnahme von entzündlichen Geräten oder Energiespeichern bekannt, welche einen Innenraum zur Aufnahme eines derartigen Gerätes und eine feuerhemmende Wandung enthält. Die Rückseite der Tasche enthält eine Einschubtasche, in die eine Feuerlöschdecke eingesetzt ist. Der Oberbegriff von Anspruch 1 basiert auf dieser US 2009/190865 A1.

Die EP 2193066 B1 zeigt eine Koppelvorrichtung zum lösbaren Anbringen von Zubehör an einem Fahrrad, das Kopplungsteile enthält, die mit komplementär ausgebildeten Kupplungseinheiten an dem Fahrrad in Verbindung treten können.

Der Erfindung liegt die Aufgabe zugrunde, eine feuerhemmende Tasche zur Aufnahme von entzündlichen Geräten oder Energiespeichern, insbesondere Lithium-Batterien oder Lithium-Ionen-Akkumulatoren, anzugeben, die einfach gestaltet ist, ein geringes Gewicht und ein kleines Volumen aufweist, die für exotherm entstehende Temperaturen über 800 °C einsetzbar ist und die die besonderen Anforderungen der Luftfahrtindustrie sowohl im zivilen als auch im militärischen Bereich erfüllt.

Diese Aufgabe wird durch die im Anspruch 1 angegebene Erfindung erfüllt. Weitergehende Merkmale der Erfindung sind in Unteransprüchen angegeben.

Die Erfindung geht aus von einer Tasche mit einem Innenraum zur Aufnahme eines Gerätes oder Energiespeichers und mit einer den Innenraum umgebenden Wandung, wobei die Wandung flexibel und mehrschichtig mit wenigstens einer Schicht aus feuerhemmendem Material ausgestaltet ist, das einer von dem Innenraum ausgehenden Temperatur von > 800°C widersteht.

Die Erfindung sieht ferner vor, dass die Wandung einen Schichtenaufbau in Form einer Schicht aus textilem Material, vorzugsweise Baumwollmaterial, und wenigstens einer darauf nach innen folgenden Schicht aus Silica-Faser- oder -Gewebematerial aufweist, wobei der Innenraum gegenüber der Umgebung verschließbar ist.

Bei der Erfindung ist die Rückseite der Tasche mit einer Einschubtasche versehen, in die ein plattenförmiges Stabilisierungselement eingesetzt ist. Zur lösbaren Verbindung mit einem Konstruktionsteil eines Flugzeugs ist eine parallel zum Stabilisierungselement angeordnete Halteplatte vorgesehen, welche mit dem in das Einschubbach eingesetzten Stabilisierungselement über lösbare Verbindungsmittel verbindbar ist. Die Verbindungsmittel enthalten an der Halteplatte angeordnete Halter mit Schlitzen, in die knopfartige Vorsprünge des Stabilisierungselements derart eingreifen, dass bei Verschiebung der Tasche in Öffnungsrichtung der Schlitze eine Trennung von Stabilisierungsmittel und Halteplatte erfolgt.

Eine Abnahme der Tasche von der Halteplatte ist daher erst nach manuellem Lösen der Sicherungsvorrichtung, möglich.

Zum einfachen Öffnen und Schließen der Tasche wird vorzugsweise ein Reißverschluss verwendet. Auch kann alternativ oder zusätzlich ein Velcroband verwendet werden. Bei Verwendung eines Reißverschlusses kann dabei ein Velcroband den Reißverschluss, insbesondere in dessen Endbereichen, zusätzlich abdecken.

Es ist von Vorteil, wenn die Tasche ein Trageelement, wie einen Tragegurt, enthält.

In einer besonderen Ausführungsform der Erfindung ist die Öffnung der Tasche mit einer Abdeckklappe versehen, die an einem Öffnungsrand der Tasche befestigt ist und die Öffnung nach Art einer Bürotasche übergreift.

Diese Ausführungsform ist insbesondere zum Einsatz im Cockpit oder im Passagierbereich eines Flugzeugs verwendbar.

Die Erfindung wird nachstehend anhand eines Ausführungsbeispiels näher erläutert. Es zeigen:
- Fig.1: eine isometrische Ansicht einer Tasche gemäß der Erfindung,
- Fig.2: eine Aufsicht auf eine Tasche nach Fig. 1,
- Fig.3: eine Schnittansicht einer Tasche nach Fig. 2 entlang der Linie A-A von Fig. 2, und
- Fig.4: eine Explosionsansicht der Rückseite einer Tasche nach Fig. 1.

Die In den Figuren -1 - 4 dargestellten Ansichten sind stark vereinfachte Darstellungen.

Die Tasche weist eine äußere Lage aus Baumwollmaterial auf. Darauf folgt eine Schicht aus einem Glasfasermaterial in Form eines Nadelfilzes aus E-Glas, das nichtkeramisch ist und einer Temperatur von 1.000 °C standhalten kann und darauf ein texturiertes Silicaglasgewebe in Leinwandbindung.

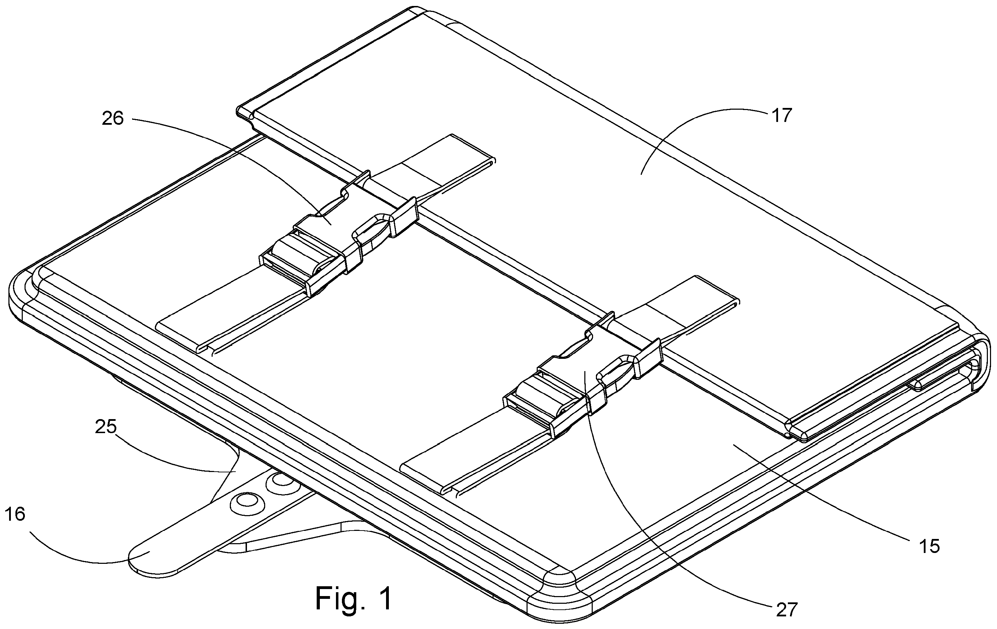

Figur 1 zeigt eine Ausführungsform der Erfindung. Die Tasche 15 ist im Wesentlichen als flache flexible Tasche ausgebildet, die an ihrer Öffnung mit einer Klappe 17 verschließbar ist.

Zusätzlich kann ein Reißverschluss verwendet werden. Die Klappe 17 wird mittels üblicher Schnallen 26 und 27 gesichert. Mittels einer Sicherungslasche 16 lässt sich die Tasche 15 von einer Halteplatte 19 entfernen.

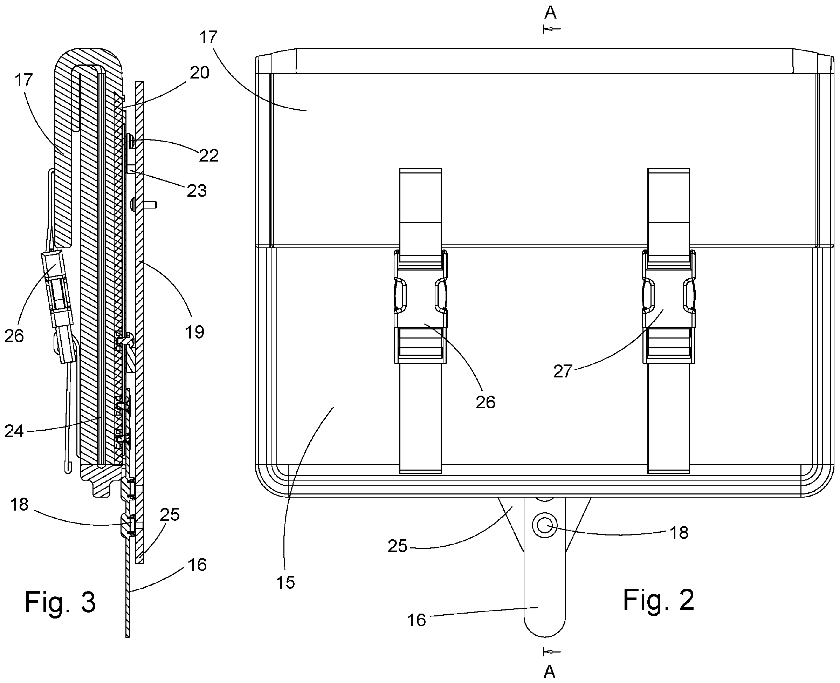

Die Figur 2 zeigt die Tasche 15 in Vorderansicht mit Klappe 17, Schnallen 26 und 27 und einer an der Tasche befestigten Sicherungslasche 16, die mittels Druckknöpfen an einem Ansatz 25 einer rückseitigen Halteplatte fixierbar ist.

In Figur 3 ist die Tasche 15 in Schnittansicht entlang der Linie A-A von Figur 2 gezeigt. Die Tasche weist nur einen schmalen Aufnahmeraum 24 auf, der jedoch ausreichend ist, um einen Tablet-Computer, Mobiltelefone oder Geräte ähnlicher Größe aufzunehmen.

Die Tasche 15 weist auf ihrer Rückseite eine durch einen Reißverschluss verschließbare Öffnung einer Einschubtasche auf, in die ein Stabilisierungselement 20 eingesetzt ist. Das Stabilisierungselement 20 kann mit einer dazu parallel angeordneten Halteplatte 19 gekoppelt werden, indem knopfartige Vorsprünge 22 des Stabilisierungselements 20 in Schlitze von Haltern 23 eingreifen, die an der Halteplatte 19 befestigt sind. Beim parallelen Verschieben der Tasche 15 entlang der Halteplatte 19 nach oben lösen sich die Vorsprünge 22 aus den Schlitzen der Halter 23, so dass die Tasche von der Halteplatte 19 entfernt werden kann. Um ein unabsichtliches Verschieben der Tasche und Lösen (z.B. durch Kräfte, die während des Fluges auftreten) aus den Haltern zu vermeiden, weist die Tasche vorzugsweise eine Sicherungsvorrichtung auf, die in Form einer Sicherungslasche 16 gebildet sein kann, die Druckknopfelemente 18 enthält, die in Gegenstücke auf einem Ansatz 25 der Halteplatte 19 eingreifen. Die Trennung von Tasche 15 und Halteplatte 19 ist damit erst möglich, wenn die Druckknopfelemente 18 durch Vorziehen der Lasche 16 freigegeben wurden.

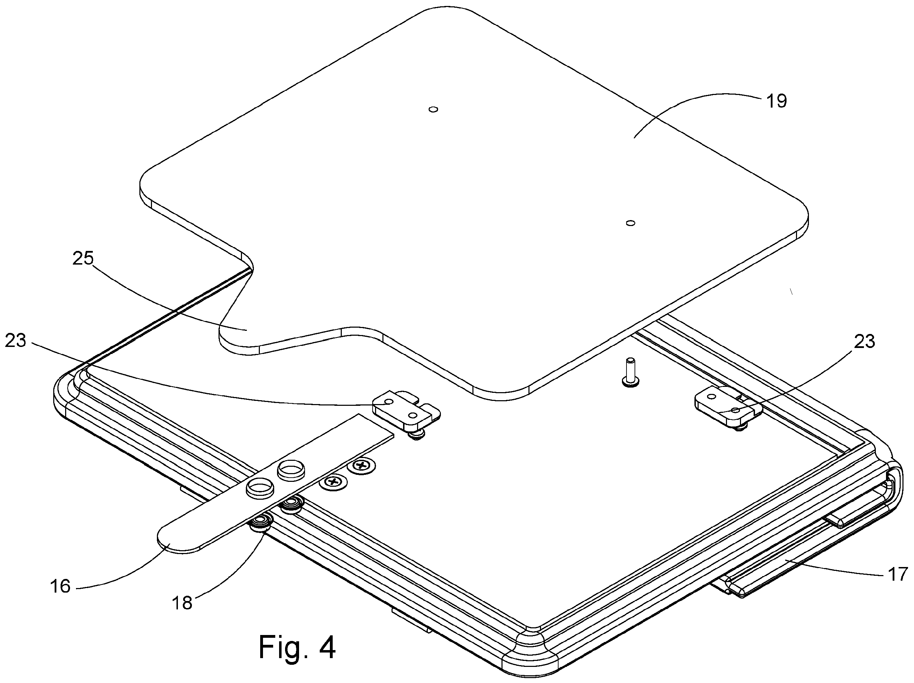

Figur 4 zeigt eine perspektivische Explosionsansicht der Rückseite der Tasche 15 mit Haltern 23, der Lasche 16, den Druckknöpfen 18 und der Halteplatte 19. Diese lässt sich mittels Haltestiften an einer Wand oder einem anderen Konstruktionselement, z.B. im Flugzeug, befestigen.

Diese Tasche ist insbesondere im Passagier- und Cockpitbereich eines Flugzeugs mit Vorteil einsetzbar, wenn Tablet-Computer unter Sicherheitsbedingungen aufgeladen werden sollen.

Dabei wird der Computer in die Tasche eingesetzt, wobei das Ladekabel an einer Seite der Klappe 17 aus der Tasche 15 herausgeführt werden kann.

Die verwendeten Schichten der Tasche werden insbesondere durch ein mit Aramid ummanteltes Metallnähgarn miteinander vernäht.

Diese Erfindung ist nicht nur in Flugzeugen, sondern in jeder Art von Fluggeräten und auch in anderen Industriegütern einsetzbar, in denen Gefährdungen durch Verwendung von LithiumBatterien zu begegnen ist.

### Bezugszeichen

- 15: Tasche
- 16: Sicherungslasche
- 17: Klappe
- 18: Druckknopf
- 19: Halteplatte
- 20: Stabilisierungselement
- 22: Vorsprung
- 23: Halter
- 24: Aufnahmeraum
- 25: Ansatz
- 26: Schnalle
- 27: Schnalle

## Patentansprüche

1. Feuerhemmende Tasche (15) zur Aufnahme von entzündlichen Geräten oder Energiespeichern, insbesondere Lithium-Ionen-Batterien, mit einem Innenraum (24) zur Aufnahme eines derartigen Gerätes oder Energiespeichers und mit einer den Innenraum (24) umgebenden Wandung, wobei die Wandung flexibel und mehrschichtig mit wenigstens einer Schicht aus feuerhemmendem Material ausgestaltet ist, das einer von einem in den Innenraum (24) aufgenommenen Gerät oder Energiespeicher ausgehenden Temperatur von > 800 °C widersteht, wobei die Wandung einen Schichtenaufbau in Form einer Schicht aus textilem Material und wenigstens einer darauf folgenden Schicht aus Silica-Faser- oder -Gewebematerial aufweist, und der Innenraum (24) gegenüber der Umgebung verschließbar ist, **dadurch gekennzeichnet, dass** die Rückseite der Tasche (15) mit einer Einschubtasche versehen ist, in die ein plattenförmiges Stabilisierungselement (20) eingesetzt ist, und dass zur lösbaren Verbindung mit einem Konstruktionsteil eines Flugzeuges eine parallel zum Stabilisierungselement (20) angeordnete plattenförmige Halteplatte (19) vorgesehen ist, welche mit dem in das Einschubfach eingesetzten Stabilisierungselement (20) über lösbare Verbindungsmittel (22, 23) verbindbar ist, wobei die Verbindungsmittel (22, 23) an der Halteplatte (19) angeordnete Halter (23) mit Schlitzen enthalten, in die knopfartige Vorsprünge (22) des Stabilisierungselements (20) derart eingreifen, dass bei Verschiebung der Tasche in Öffnungsrichtung der Schlitze eine Trennung von Stabilisierungselement (20) und Halteplatte (19) erfolgt.

2. Feuerhemmende Tasche (15) nach Anspruch 1, **dadurch gekennzeichnet, dass** die Tasche (15) ein äußeres Tragelement zum manuellen Transport der Tasche (15) aufweist.

3. Feuerhemmende Tasche (15) nach Anspruch 1, **dadurch gekennzeichnet, dass** die Tasche einen Schichtenaufbau ihrer Wandung in Form einer Schicht aus textilem Material mit darauf folgender Silica-Schicht aus E-Glas Nadelfilzmaterial und einer gewebten Silica-Schicht in Leinwandbindung aufweist.

4. Feuerhemmende Tasche (15) nach Anspruch 1, **dadurch gekennzeichnet, dass** die Tasche einen Schichtenaufbau ihrer Wandung in Form einer Schicht aus textilem Material mit darauf folgender Silica-Schicht aus E-Glas Nadelfilzmaterial und wenigstens zwei gewebten Silica-Schichten mit unterschiedlicher Bindung aufweist.

5. Feuerhemmende Tasche (15) nach Anspruch 1, **dadurch gekennzeichnet, dass** die Tasche (15) mit einer schließ- und öffnenbaren Abdeckklappe (17) versehen ist.

6. Feuerhemmende Tasche (15) nach Anspruch 1, **dadurch gekennzeichnet, dass** zwischen Tasche (15) und Halteplatte (19) eine Sicherungsvorrichtung (16) zur Verhinderung einer unbeabsichtigten Trennung von Tasche und Halteplatte vorgesehen ist.

7. Feuerhemmende Tasche (15) nach Anspruch 6, **dadurch gekennzeichnet, dass** an der Tasche eine Sicherungslasche (16) vorgesehen ist, die Druckknopfelemente (18) enthält, die in Gegenstucke an der Halteplatte (19) eingreifen, und dass eine Verschiebung und Trennung von Halteplatte (19) und Stabilisierungselement (20) gegeneinander nur moglich ist, nachdem die Druckknopfelemente (18) und ihre Gegenstücke durch Betätigen der Sicherungslasche (16) voneinander getrennt wurden.

## Claims

1. A fire-retardant bag (15) for accommodating flammable devices or energy stores, in particular lithium-ion batteries, having an interior (24) for accommodating such a device or energy store and having a wall surrounding the interior (24), wherein the wall is flexible and of multi-layer design with at least one layer of fire-retardant material which withstands a temperature emanating from a device or energy store accommodated in the interior (24) of > 800°C, wherein the wall has a layered structure in the form of a layer of textile material and at least one following layer of silica fibre material or silica woven fabric material, and the interior (24) can be closed with respect to the surroundings, **characterised in that** the rear side of the bag (15) is provided with an insertion pocket into which a plate-shaped stabilising element (20) is inserted, and that, for detachable connection to a structural part of an aircraft, a plate-shaped retaining plate (19) arranged parallel to the stabilising element (20) is provided, which can be connected to the stabilising element (20) inserted into the insertion pocket via detachable connection means (22, 23), wherein the connection means (22, 23) contain retainers (23) with slots, which are arranged on the retaining plate (19), engage in the button-like projections (22) of the stabilising element (20) such that when the bag is displaced in the opening direction of the slots, a separation of the stabilising element (20) and retaining plate (19) takes place.

2. The fire-retardant bag (15) according to Claim 1, **characterised in that** the bag (15) has an outer supporting element for the manual transport of the bag (15).

3. The fire-retardant bag (15) according to Claim 1, **characterised in that** the bag has a layer structure of its wall in the form of a layer of textile material with the following silica layer made of E-glass needle felt material and a woven silica layer in plain weave.

4. The fire-retardant bag (15) according to Claim 1, **characterised in that** the bag has a layer structure of its wall in the form of a layer of textile material with the following silica layer made of E-glass needle felt material and at least two woven silica layers with different binding.

5. The fire-retardant bag (15) according to Claim 1, **characterised in that** the bag (15) is provided with a cover flap (17) which can be closed and opened.

6. The fire-retardant bag (15) according to Claim 1, **characterised in that** a securing device (16) for preventing unintentional separation of the bag and the retaining plate is provided between the bag (15) and the retaining plate (19).

7. The fire-retardant bag (15) according to Claim 6, **characterised in that** a securing tab (16) is provided on the bag, which contains snap button elements (18) which engage in counterparts on the retaining plate (19), and that a displacement and separation of the retaining plate (19) and stabilising element (20) from one another is only possible after the snap button elements (18) and their counterparts have been separated from one another by actuating the securing tab (16).

## Revendications

1. Poche (15) ignifuge destinée à recevoir des appareils inflammables ou des accumulateurs d'énergie, en particulier des batteries lithium-ion, présentant un espace interne (24) destiné à recevoir un tel appareil ou accumulateur d'énergie et présentant une paroi entourant l'espace interne (24), la paroi étant conçue de manière souple et à plusieurs couches, dont au moins une couche est en matériau ignifuge, qui résiste à une température, émanant de l'appareil ou de l'accumulateur d'énergie logé dans l'espace interne (24), > 800°C, la paroi présentant une structure stratifiée sous forme d'une couche en matériau textile et d'au moins une couche successive à celle-ci en matériau de silice-fibres ou de silice-tissu, et l'espace interne (24) pouvant être fermé par rapport à l'environnement, **caractérisée en ce que** la face arrière de la poche (15) est pourvue d'une poche d'insertion dans laquelle un élément de stabilisation (20) en forme de plaque est introduit et **en ce que**, pour la liaison amovible avec une pièce structurelle d'un avion, une plaque de retenue (19) en forme de plaque agencée parallèlement à l'élément de stabilisation (20) est prévue, laquelle plaque de retenue peut être reliée à l'élément de stabilisation (20) introduit dans le compartiment d'insertion par l'intermédiaire de moyens de liaison (22, 23) amovibles, les moyens de liaison (22, 23) contenant des dispositifs de retenue (23) agencés au niveau de la plaque de retenue (19) et pourvus d'encoches dans lesquelles des saillies (22) en forme de bouton de l'élément de stabilisation (20) pénètrent de telle sorte que lors du déplacement de la poche dans le sens d'ouverture des encoches, il se produit une séparation de l'élément de stabilisation (20) et de la plaque de retenue (19).

2. Poche (15) ignifuge selon la revendication 1, **caractérisée en ce que** la poche (15) présente un élément support externe pour le transport manuel de la poche (15).

3. Poche (15) ignifuge selon la revendication 1, **caractérisée en ce que** la poche présente une structure stratifiée de sa paroi sous forme d'une couche en matériau textile, d'une couche de silice successive à celle-ci en feutre aiguilleté en verre E et d'une couche de silice tissée en armure toile.

4. Poche (15) ignifuge selon la revendication 1, **caractérisée en ce que** la poche présente une structure stratifiée de sa paroi sous forme d'une couche en matériau textile, d'une couche de silice successive à celle-ci en feutre aiguilleté en verre E et d'au moins deux couches de silice tissées avec une armure différente.

5. Poche (15) ignifuge selon la revendication 1, **caractérisée en ce que** la poche (15) est pourvue d'un rabat de recouvrement (17) pouvant être fermé et ouvert.

6. Poche (15) ignifuge selon la revendication 1, **caractérisée en ce qu'**un dispositif de sécurité (16) est prévu entre la poche (15) et la plaque de retenue (19) et destiné à empêcher une séparation involontaire de la poche et la plaque de retenue.

7. Poche (15) ignifuge selon la revendication 6, **caractérisée en ce qu'**une patte de sécurité (16) est prévue au niveau de la poche et contient des éléments de bouton-poussoir (18) qui pénètrent dans des contre-pièces au niveau de la plaque de retenue (19) et **en ce qu'**un déplacement et une séparation de la plaque de retenue (19) et de l'élément de stabilisation (20) l'un par rapport à l'autre n'est possible que lorsque les éléments de bouton-poussoir (18) et leurs contre-pièces ont été séparés les uns des autres par actionnement de la patte de sécurité (16).
